# EUROPEAN PATENT APPLICATION

(11) **EP 1 411 572 A1**
(43) Date of publication of application: **21.04.2004**
(21) Application number: 02751701.0
(22) Date of filing: 25.07.2002
(51) Int. Cl.: H01M 8/04, H01M 8/06

(54) **FUEL CELL SYSTEM**

(30) Priority: 26.07.2001 JP 2001225906; 10.12.2001 JP 2001375587
(71) Applicant: MATSUSHITA ELECTRIC INDUSTRIAL CO., LTD., Kadoma-shi, Osaka 571-8501 (JP)
(72) Inventor: YOSHIDA, Yutaka, Nabari-shi, Mie 518-0746 (JP); ASOU, Tomonori, Koryocho, Kitakatsuragi-gun, Nara 635-08 (JP); MAENISHI, Akira, Ikeda-shi, Osaka 563-0055 (JP); TOMIZAWA, Takeshi, Ikoma-shi, Nara 630-0123 (JP); MUKAI, Yuji, Kadoma-shi, Osaka 571-0070 (JP); UKAI, Kunihiro, Ikoma-shi, Nara 630-0213 (JP)
(74) Representative: Price, Paul Anthony King
(86) International application number: PCT/JP2002/007574
(87) International publication number: WO 2003/010846

(57) **Abstract**

A fuel cell system comprising: a reforming section; a feedstock supply section for the reforming section; a water supply section for the reforming section; a fuel cell; a burner for the reforming section; an air supply section for the burner; a fuel supply section for the burner; a fuel supply conduit for supplying the fuel and an off-gas from the fuel cell to the burner; and a flame trap section provided to the fuel supply conduit, wherein heating means for heating the flame trap section is further provided in order to stop a backfire without clogging the fuel supply conduit.

## Description

### Technical Field

The present invention relates to a hydrogen producing apparatus that produces hydrogen, using a hydrocarbon type substance such as natural gas, LPG, gasoline, naphtha or kerosene or a substance such as methanol, water and air as raw materials, and to a fuel cell system comprising a fuel cell.

### Background Art

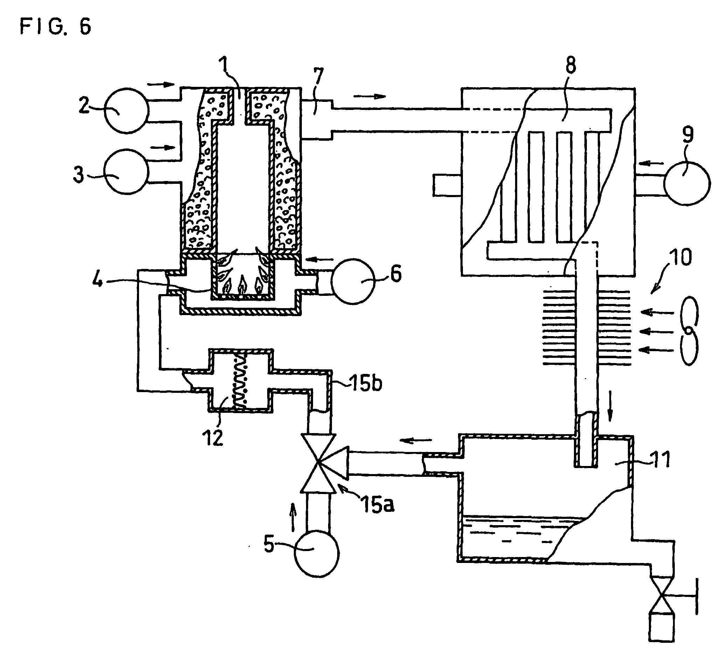

The structure of a conventional fuel cell system will be described with reference to FIG. 6. The conventional fuel cell system comprises a reforming section 1 into which a reforming catalyst is charged, a feedstock supply section 2 for supplying a feedstock to the reforming section 1, a water supply section 3 for supplying water to the reforming section 1, and a burner 4 for heating the reforming catalyst, and a hydrocarbon type substance, alcohol or the like reacts with water at the reforming section 1, thereby to produce hydrogen. The conventional fuel cell system also comprises a fuel supply section 5 for supplying a fuel to the burner section 4, an air supply section 6 for supplying air to the burner section 4, an outlet section 7 of hydrogen produced at the reforming section 1, a polymer electrolyte fuel cell 8, an oxidant gas supply section 9, a condenser 10, and a tank 11 for condensed water. And, electric power is generated at the fuel cell 8 such as a polymer electrolyte fuel cell, using hydrogen discharged from the outlet section 7 and an oxidant gas such as air supplied by the oxidant gas supply section 9. The off-gas which contains waste hydrogen discharged from the fuel cell 8 has a high water content due to humidification during the power generation.

The water contained in the off-gas is condensed by the condenser 10, condensed water is trapped in the tank 11, and the off-gas from which some of the water is eliminated is introduced to the burner 4 as the fuel. Thus, in burning such off-gas by the burner 4, there is a need to provide a flame trap section 12 between the fuel supply section 5 and the burner 4 as means of preventing a possible backfire. The flame trap section 12 is provided in a fuel supply conduit 15b through which a mixed gas of the off-gas from the condenser 10 and the fuel from the fuel supply section 5 is introduced to the burner 4, and in the event of a backfire at the burner 4, it functions as a safety mechanism for preventing the backfire from propagating toward the upstream.

However, even with the employment of the structure of trapping, in midstream, the water contained in the off-gas discharged from the fuel cell 8, the off-gas is introduced to the burner 4 as the gas containing almost saturated steam. Thus, condensation of the water contained in the off-gas may take place at the flame trap section 12 provided for preventing a backfire, and as a result, the fuel supply conduit may be clogged to cause a pressure imbalance, possibly stopping the operation of the whole fuel cell system.

In view of such conventional problem, an object of the present invention is to provide a fuel cell system that has backfire stopping means without clogging the fuel supply conduit.

### Disclosure of Invention

In order to solve the above-described problem, the present invention provides a fuel cell system comprising: a reforming section charged with a reforming catalyst; a feedstock supply section for supplying a feedstock to the reforming section; a water supply section for supplying water to the reforming section; a fuel cell that operates on hydrogen obtained at the reforming section; a burner for heating the reforming section; an air supply section for supplying air to the burner; a fuel supply section for supplying a fuel to the burner; a fuel supply conduit for supplying the fuel and an off-gas from the fuel cell to the burner; and a flame trap section provided to the fuel supply conduit, wherein heating means is further provided for heating the flame trap section.

The heating means is preferably a heater disposed near the flame trap section.

The fuel cell system preferably comprises: a first temperature detector for detecting the temperature of the flame trap section; and a first control section for controlling the operation of the heater under signals of the temperature detector.

Also, the fuel cell system preferably comprises a second temperature detector for detecting the temperature of the heater.

The heater is preferably disposed at a position at which the heater heats a burner port of the burner.

Also, the fuel cell system preferably comprises a third temperature detector for detecting the temperature of the burner.

The heating means preferably heats at least one of the fuel and the off-gas.

Further, the fuel cell system preferably comprises: a condenser for condensing water contained in the off-gas; and a fourth temperature detector for detecting the temperature of the condenser.

Also, the fuel cell system preferably comprises a fifth temperature detector for detecting the temperature of the fuel cell.

The reforming section or the burner is preferably disposed at a position at which the reforming section or the burner is capable of transferring its heat to the flame trap section.

The flame trap section is preferably comprised of metal mesh having spaces whose size is not larger than the minimum distance of quenching hydrogen flame.

The flame trap section is preferably comprised of heat-resistant stainless steel.

Further, the fuel cell system preferably comprises: a first flame detector for detecting flame of the burner and/or a third temperature detector; and a second flame detector for detecting flame of the flame trap section and/or a first temperature detector.

Furthermore, the fuel cell system preferably comprises: a shut-off valve for controlling supply of the feedstock from the feedstock supply section to the reforming section; and a second control section for operating the shut-off valve in cooperation with at least one of the first flame detector, the third temperature detector, the second flame detector and the first temperature detector.

### Brief Description of Drawings

FIG. 1 is an illustration showing the structure of a fuel cell system in Embodiment 1 of the present invention.
FIG. 2 is an illustration showing the structure of a fuel cell system in Embodiment 2 of the present invention.
FIG. 3 is an illustration showing the structure of a fuel cell system in Embodiment 3 of the present invention.
FIG. 4 is an illustration showing the structure of a fuel cell system in Embodiment 4 of the present invention.
FIG. 5 is an illustration showing the structure of a fuel cell system in Embodiment 5 of the present invention.
FIG. 6 is an illustration showing the structure of a conventional fuel cell system.

### Best Mode for Carrying Out the Invention

### Embodiment 1

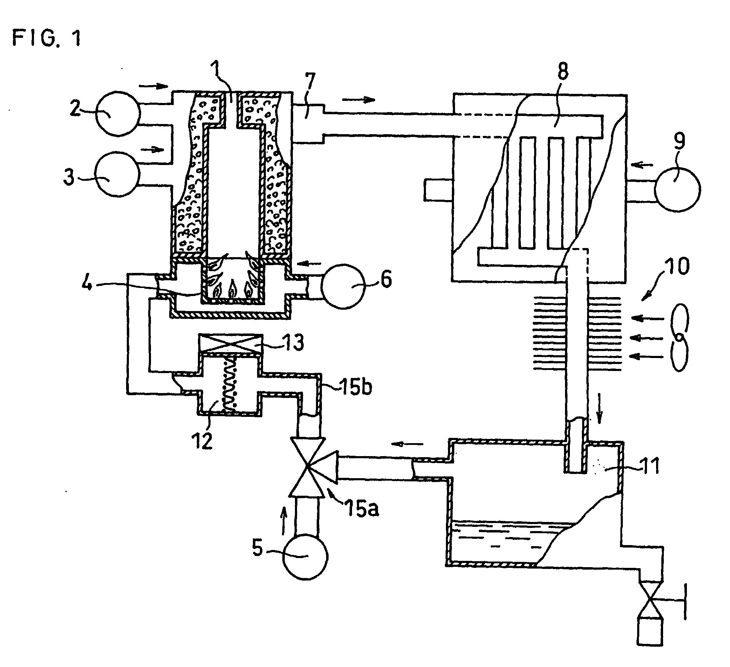

FIG. 1 is an illustration showing the structure of a fuel cell system in Embodiment 1 of the present invention. The fuel cell system in Embodiment 1 comprises a reforming section 1 into which a reforming catalyst is charged, a feedstock supply section 2 for supplying a feedstock to the reforming section 1, a water supply section 3 for supplying water to the reforming section 1, and a burner 4 for heating the reforming catalyst. At the reforming section 1, the feedstock (gas) reacts with water to produce hydrogen. It also comprises a fuel supply section 5 for supplying a fuel to the burner 4 and an air supply section 6 for supplying air to the burner 4.

Here, examples of the feedstock and the fuel supplied from the feedstock supply section 2 and the fuel supply section 5, respectively, include gaseous hydrocarbon type fuels such as natural gas (town gas) and LPG, liquid hydrocarbon type fuels such as gasoline and kerosene, and alcohol type fuels such as methanol.

However, the use of a liquid fuel necessitates an apparatus for vaporizing the fuel (vaporizer), and it is also possible to use heat conducted from the reforming section 1 and the burner 4 and a vaporizer utilizing sensible heat in the combustion exhaust gas. Such a vaporizer is not particularly illustrated in FIG. 1.

Also, a pump or fan, for example, may be used to control the flow rate of the feedstock supply section 2, fuel supply section 5 and air supply section 6. Further, a flow controller such as a valve may also be provided downstream of the pump, fan or the like. Such a flow controller is omitted from FIG. 1.

Into the reforming section 1 is charged a reforming catalyst comprising ruthenium carrying alumina. A shift catalyst comprising CeO₂ carrying platinum is charged into the downstream thereof, and a CO purifying catalyst carrying a platinum-ruthenium mixture is further charged into the downstream thereof.

Hydrogen produced at the reforming section 1 is introduced to a fuel cell 8 from an outlet section 7. The CO concentration of produced hydrogen has been decreased to a few tens of ppm or lower by this time. The fuel cell system in Embodiment 1 further comprises the fuel cell 8 such as a polymer electrolyte fuel cell, an oxidant gas supply section 9, a condenser 10, and a tank 11 for condensed water. The fuel cell 8 generates electric power, using hydrogen discharged from the outlet section 7 and an oxidant gas supplied by the oxidant gas supply section 9.

The off-gas discharged from the fuel cell 8 has a high water content, and the water is condensed by the condenser 10 and condensed water is trapped in the tank 11. Thereafter, the off-gas is introduced to the burner 4 and utilized as a fuel.

Also, the off-gas from the tank 11 and the fuel from the fuel supply section 5 are mixed at a position 15a, and the mixed gas is supplied to the burner 4 through a fuel supply conduit 15b. The fuel supply conduit 15b is provided with a flame trap section 12, and the flame trap section 12 functions as a safety apparatus for preventing a backfire that has occurred at the burner 4 from propagating toward the upstream.

Here, the off-gas, which is being supplied to the burner 4, reaches the flame trap section 12 while having a water content which is close to saturated steam, although some of the water has been trapped in the tank 11. Thus, when the temperature of the flame trap section 12 is lower than the dew point of the off-gas, water condenses on the flame trap section 12, and as a result, the fuel supply conduit 12b may be clogged to cause a pressure imbalance, possibly stopping the operation of the whole fuel cell system.

In the present invention, a heater 13 is provided near the flame trap section 12, and the heater 13 heats the flame trap section 12 when the temperature of the flame trap section 12 is still low at the time of the start of operation or the like. This can make the temperature of the flame trap section 12 not lower than the dew point of the off-gas and solve the above-described problem.

Further, since the heater 13 can also heat the off-gas simultaneously, it becomes possible to keep the flame which tends to become unstable during the start-up of the burner 4 in a stable state.

As the heater 13, for example, the sheath heater 13 may be used. The sheath heater 13 heats the flame trap section 12 mainly by radiant heat. Other than the sheath heater, it is possible to use any type of heater which is a heating element such as a ribbon heater. Also, heating may be performed in any form, using, for example, a method of heating the outer surface of the fuel supply conduit 15b.

### Embodiment 2

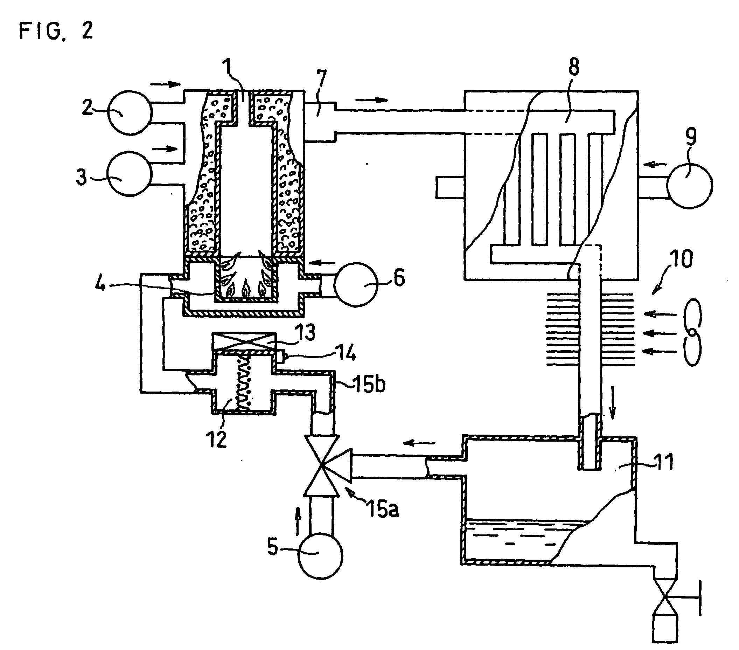

FIG. 2 is an illustration showing the structure of a fuel cell system in Embodiment 2 of the present invention. Embodiment 2 is different from Embodiment 1 in that, as shown in FIG. 2, a first temperature detector 14 is provided near a flame trap section 12, and that the operation of a heater 13 is controlled under signals of the temperature detector 14. It is noted that a control section for controlling the operation of the heater 13 under signals of the temperature detector 14 is not illustrated in the figure.

As the first temperature detector 14, a thermistor, for example, may be used. Other than the thermistor, for example, a thermocouple, a platinum resistance thermometer and the like may also be used.

The first temperature detector 14 may be provided at a position at which it is in contact with the flame trap section 12, and may also be provided at a position at which it can indirectly detect the temperature of the flame trap section 12. In addition, a second temperature detector may be provided at a position at which it can receive the heat from the heater 13. Also, using only the second temperature detector to detect the temperature of the heater 13, the temperature of the flame trap section 12 may be detected indirectly. The second temperature detector may be provided at a position at which it is in contact with the heater 13, and may also be provided at a position at which it can indirectly detect the temperature of the heater 13.

When the temperature of the flame trap section 12 detected by the first temperature detector 14 (or second temperature detector) is lower than the dew point of the off-gas, the heater 13 is energized by the control section. In this way, the use of the first temperature detector 14 to control the operation of the heater 13 enables more reliable prevention of the clogging of a fuel supply conduit 15b and can suppress unnecessary energization of the heater 13 to reduce wasteful consumption of electric power.

Further, in Embodiment 2 of the present invention, the first temperature detector 14 is provided at a position at which it can receive the heat from the heater 13; thus, in the event of a dangerous situation in which the heater 13 becomes out of control, the dangerous situation can be detected by the first temperature detector 14. Therefore, the first temperature detector 14 also serves as a safety apparatus of the heater 13.

Further, in the present invention, it is preferable to provide the heater 13 at a position at which it can heat the burner port of a burner 4. This makes it possible to preheat the burner 4, and the preheating can realize stable ignition when the ignition becomes unstable in a low temperature environment because of low temperature of the burner port. In FIG. 2, the heater 13 is physically away from the burner 4, but both of them are preferably in contact with each other from the viewpoint of the efficiency of thermal conduction.

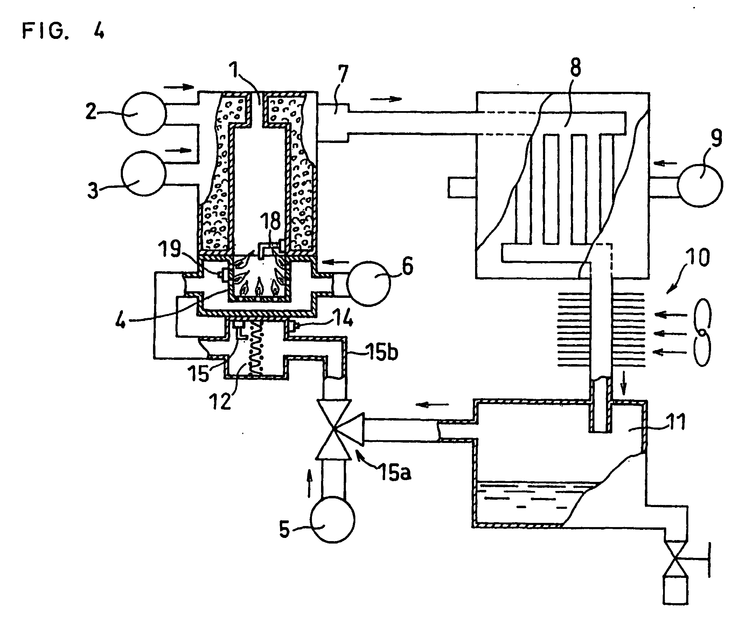

Furthermore, in the present invention, a third temperature detector is preferably provided for detecting the temperature of the burner 4 upon the ignition. Of course, the above-described first temperature detector 14 may be used to detect the temperature of the burner 4 upon the ignition. Generally, by employing a control sequence of distinguishing the hot state of the burner 4 from the cold state and changing the air/fuel ratio upon the ignition in order to ignite the burner 4 in a more reliable manner, the third temperature detector can be utilized as such means of distinguishing the hot state from the cold state. It is noted that the third temperature detector is illustrated in FIG. 4 in embodiment 4 that will be described later.

### Embodiment 3

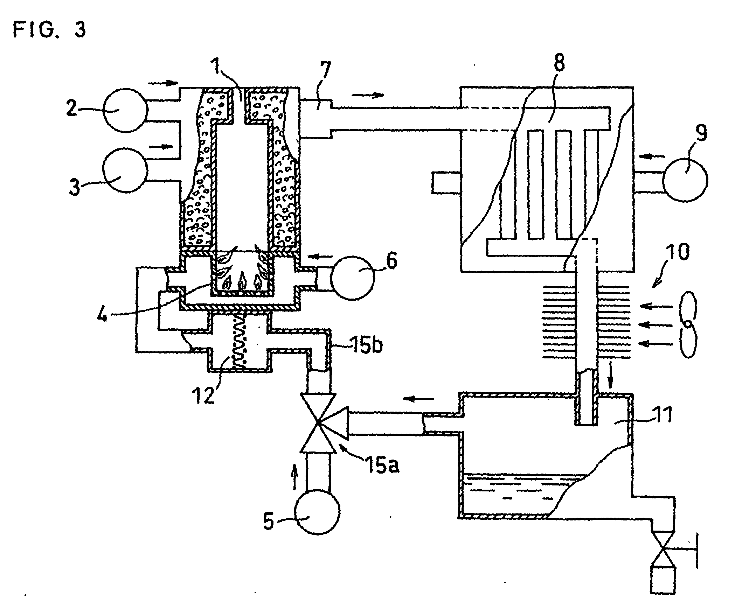

FIG. 3 is an illustration showing the structure of a fuel cell system in Embodiment 3 of the present invention. Embodiment 3 is different from Embodiment 1 in that, as shown in FIG. 3, a flame trap section 12 is provided at a position adjacent to a burner 4 and a reforming section 1 which becomes high in temperature, so that it can receive heat from them. By receiving the heat from them, the flame trap section 12 can have a temperature not lower than the dew point of the off-gas.

Also, in this embodiment, the burner 4 and the flame trap section 12 are formed unitarily, so that due to thermal conduction, the heat is conducted readily from the burner 4 to the flame trap section 12. The temperature of the combustion part inside the burner 4 is approximately 1000°C, and the reaction temperature of the reforming catalyst inside the reforming section 1 is approximately 700°C. Thus, it is also possible to adopt a method of transferring heat to the flame trap section 12 by radiation from the burner 4 or the reforming section 1 or a method of directly heating the flame trap section 12 by the exhaust combustion gas of the burner 4.

Further, it is preferable that the flame trap section 12 be comprised of metal mesh and that the size of the open spaces thereof be made not larger than hydrogen flame quenching distance. This makes it possible to minimize the thermal capacity of the flame trap section 12 and receive the heat from the burner 4 or the reforming section 1 in a short time. In addition, it is possible to stop a backfire at a lower cost and reliably.

Furthermore, as the material constituting the flame trap section 12, it is preferable to use stainless steel having high corrosion resistance. This allows the flame trap section 12 to have highly durable performance with high corrosion resistance even when waste hydrogen that is constantly high in water content is passed therethrough.

### Embodiment 4

FIG. 4 is an illustration showing the structure of a fuel cell system in Embodiment 4 of the present invention. Embodiment 4 is different from Embodiment 1 in that, as shown in FIG. 4, a burner 4 is provided with a first flame detector 18 for detecting flame formed in the burner 4 and/or a third temperature detector 19, and that a flame trap section 12 is provided with a second flame detector 15 for detecting flame formed in the flame trap section 12 and/or a first temperature detector 14.

The first flame detector 18 and the second flame detector 15 that may be used are of the type of measuring the ion current in the flame of the burner 4 by a flame rod to detect the presence or absence of flame. Other than this, a method of detecting the color or brightness, light or infrared rays of the flame may also be employed. As the third temperature detector 14 and the first temperature detector 14, a thermocouple is preferably used from the thermal-response oriented viewpoint. Other than this, a platinum resistance thermometer, a thermistor, or the like may also be used.

At the burner 4, using the first flame detector 18 or the third temperature detector 19 as combustion detecting means, it is always monitored that the burner 4 is in flames during combustion. And, when the flame of the burner 4 has gone out due to temporary suspension of fuel supply or unbalanced air/fuel ratio, the operation of re-ignition is usually performed without immediately stopping the operation, so that the operation returns to normal unless the flame goes out again after the re-ignition. This is because the temporary suspension of fuel supply or unbalanced air/fuel ratio is something that can happen commonly and is not unsafe itself, yet if the combustion is stopped each time it happens, it becomes relatively difficult to use the fuel cell system.

On the other hand, in case the flame of the burner 4 goes out and a backfire takes place at the flame trap section 12, the flame may propagate to a fuel supply section 5, possibly resulting in an explosion, and the operation therefore needs to be stopped immediately. The presence or absence of a backfire cannot be judged only from the information obtained from the first flame detector 18 and the third temperature detector 19 of the burner 4 although extinction of the flame of the burner 4 can be detected.

Therefore, in this embodiment, the flame trap section 12 is provided with the second flame detecting unit 15 and the first temperature detector 14. By this, when the flame of the burner 4 has gone out, it is possible to immediately judge the presence or absence of a backfire at the flame trap section 12 from the information from the second flame detecting unit 15 and the first temperature detector 14. As a result, in the event of a backfire, the operation can be stopped immediately without fail.

### Embodiment 5

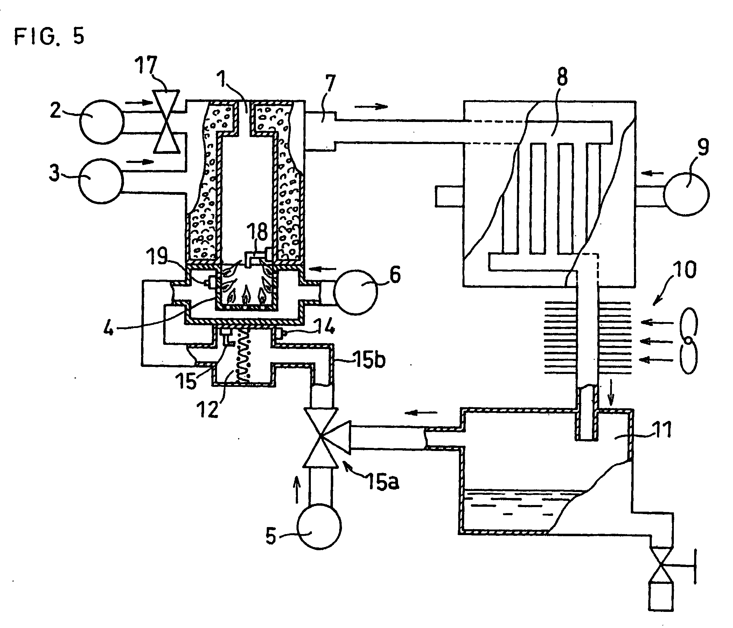

FIG. 5 is an illustration showing the structure of a fuel cell system in Embodiment 5 of the present invention. Embodiment 5 is different from Embodiment 1 in that, as shown in FIG. 5, a feedstock supply section 2 is provided with a shut-off valve 17 for stopping a feedstock that is fed to a reforming section 1, and that the shut-off valve 17 is operated in cooperation with at least one of a first flame detector 18 at a burner 4, a third temperature detector 19, a second flame detector 15 and a first temperature detector 14. A second control section may be provided for performing this control, but the above-mentioned first control section may be used to perform such control.

For example, in the case of providing both the first flame detector 18 and the second flame detector 15, the shut-off valve 17 is closed immediately when the control section receives no flame detection signal from the first flame detector 18 of the burner 4 as a result of a backfire having reached a flame trap section 12 and receives flame signals from the second flame detector 15 of the flame trap section 12. This makes it possible to immediately stop the supply of the feedstock gas, so that the production of hydrogen can be stopped, the supply of hydrogen to a fuel cell 8 can also be stopped, and the supply of waste hydrogen to the burner 4 can be stopped. As a result, the backfire is prevented from propagating further downstream of the flame trap section 12, and the danger of an explosion can be avoided.

It is noted that the fuel cell 8 is also provided with a fifth temperature detector. This makes it possible to easily set the temperature of the flame trap section 12 higher than the temperature of the fuel cell.

### Industrial Applicability

According to the present invention, a heater is disposed near a flame trap section that is provided for stopping a backfire of a burner, and the flame trap section is heated when the temperature thereof is still low at the time of the start of operation or the like, so that the temperature of the flame trap section can be made not lower than the dew point of waste hydrogen and it is possible to prevent the clogging of a fuel supply conduit caused by condensation of the waste hydrogen passing through the flame trap section.

Also, the temperature of the flame trap section is detected, using a temperature detector, and when it is lower than the dew point of the waste hydrogen, control is performed such that the heater is energized. This enables reliable prevention of the clogging of the fuel supply conduit and can suppress unnecessary energization of the heater to reduce wasteful consumption of electric power.

A temperature detector is disposed at a position at which it can receive the heat from the heater, so that in the event of a dangerous situation in which the heater becomes out of control, the abnormal situation can be detected and the safety of the heater is therefore ensured.

By employing a structure in which the heater can preheat the burner port of the burner and by preheating the burner port when the ignition becomes unstable upon ignition in a low temperature environment or the like because of low temperature of the burner port, stable ignition can be realized.

Also, by employing a structure in which a temperature detector can detect the temperature status of the burner section upon ignition, the temperature detector can be used as means for distinguishing the hot state from the cold state.

By using metal mesh to constitute the flame trap section and making the size of the open spaces of the mesh not larger than the minimum distance of quenching hydrogen flame, the thermal capacity of the flame trap section can be made smaller, so that the heat from the burner or a reforming section can be received in a short time, and a backfire can be stopped at a lower cost and reliably.

Also, by using stainless steel having high corrosion resistance as the material constituting the flame trap section, highly durable performance is ensured even when the waste hydrogen that is constantly high in water content is passed therethrough.

By providing the flame trap section with at least one of a flame detector and the temperature detector, when the flame of the burner has gone out, it is possible to immediately judge whether or not a backfire has reached the flame trap section. As a result, in the event of a backfire, the operation can be immediately stopped without fail.

A shut-off valve for stopping a feedstock is provided, and the shut-off valve is operated in cooperation with at least one of a flame detector at the burner, the temperature detector, the flame detector at the flame trap section and the temperature detector. This makes it possible to immediately stop the supply, to the burner section, of the feedstock which is the source of the waste hydrogen in case of a backfire from the burner to the flame trap section, so that the danger of an explosion can be avoided.

It is noted that although the burner 4 of the foregoing examples 1 to 5 is a premix type burner, the same effects can also be obtained in the present invention even when a diffusion burner is used.

## Claims

1. A fuel cell system comprising: a reforming section charged with a reforming catalyst; a feedstock supply section for supplying a feedstock to said reforming section; a water supply section for supplying water to said reforming section; a fuel cell that operates on hydrogen obtained at said reforming section; a burner for heating said reforming section; an air supply section for supplying air to said burner; a fuel supply section for supplying a fuel to said burner; a fuel supply conduit for supplying said fuel and an off-gas from said fuel cell to said burner; and a flame trap section provided to said fuel supply conduit, wherein heating means is further provided for heating said flame trap section.

2. The fuel cell system in accordance with claim 1, wherein said heating means is a heater disposed near said flame trap section.

3. The fuel cell system in accordance with claim 2, further comprising: a first temperature detector for detecting the temperature of said flame trap section; and a first control section for controlling the operation of said heater under signals of said temperature detector.

4. The fuel cell system in accordance with claim 3, further comprising a second temperature detector for detecting the temperature of said heater.

5. The fuel cell system in accordance with claim 2, wherein said heater is disposed at a position at which said heater heats a burner port of said burner.

6. The fuel cell system in accordance with claim 2, further comprising a third temperature detector for detecting the temperature of said burner.

7. The fuel cell system in accordance with claim 1, wherein said heating means heats at least one of said fuel and said off-gas.

8. The fuel cell system in accordance with claim 1, further comprising: a condenser for condensing water contained in said off-gas; and a fourth temperature detector for detecting the temperature of said condenser.

9. The fuel cell system in accordance with claim 1, further comprising a fifth temperature detector for detecting the temperature of said fuel cell.

10. The fuel cell system in accordance with claim 1, wherein said reforming section or said burner is disposed at a position at which said reforming section or said burner is capable of transferring its heat to said flame trap section.

11. The fuel cell system in accordance with claim 1, wherein said flame trap section is comprised of metal mesh having spaces whose size is not larger than hydrogen flame quenching distance.

12. The fuel cell system in accordance with claim 1, wherein said flame trap section is comprised of heat-resistant stainless steel.

13. The fuel cell system in accordance with claim 1, further comprising: a first flame detector for detecting flame of said burner and/or a sixth temperature detector; and a second flame detector for detecting flame of said flame trap section and/or a seventh temperature detector.

14. The fuel cell system in accordance with claim 13, further comprising: a shut-off valve for controlling supply of the feedstock from said feedstock supply section to said reforming section; and a second control section for operating said shut-off valve in cooperation with at least one of said first flame detector, said sixth temperature detector, said second flame detector and said seventh temperature detector.
